# EUROPEAN PATENT APPLICATION

(11) **EP 0 577 828 A1**
(43) Date of publication of application: **12.01.1994**
(21) Application number: 93914524.9
(22) Date of filing: 28.01.1993
(51) Int. Cl.: B60J 3/02

(54) **SUN VISOR FOR MOTOR VEHICLES**

(30) Priority: 04.02.1992 ES 9200217
(71) Applicant: FICO I.T.M., S.A., E-08027 Barcelona (ES)
(72) Inventor: AYMERICH MUNOZ, José, E-08191 Rubi (ES); PRAT CASTAN, Jesús, E-08191 Rubi (ES)
(74) Representative: SUGRANES - VERDONCES - FERREGÜELA
(86) International application number: PCT/ES93/00005
(87) International publication number: WO 93/14950

(57) **Abstract**

The sun visor for motor vehicles is comprised of a retention clamp (3) included in the body (2) of the visor which is firmly joined to one of the sides (5) of its frame (1). The retention clamp (3) is a single piece unit and is substantially shaped like a "U" channel and is arranged inside the visor body (2) so that its front edges (6b, 6b') are interiorly flush with the external surface of the face (11) facing them. The exterior surface of the visor body (2) is covered in a close fit mode by a cover (13) of textile and/or leather material like a bag whose free end (b, b') is held between the arms (6,6') of the retention clamp (3); a thin union line (15) of said free end (b, b') is determined at the front edges (6b, 6b') of the retention clamp (3). Application to the car industry.

## Description

### Field of the Invention

The object of the present invention is an automobile sun visor and more particularly a sun visor having a fabric and/or leather covering.

### Background of the Invention

Automobile sun visors formed on a metallic structural member constituted in essence by a basic rectangular form on which the sun visor body is formed by foamed polyurethane are very well known. The final contour of the so-formed sun visor, which is also basically rectangular, mates with the pertinent configuration of the interior of the automobile passenger compartment. These sun visors may comprise, like other visors structured in a different way, the regularly so-called vanity mirror for the passenger side sun visor.

Sun visors are also known in general to include means for their attachment to a bracket member attached to the automobile structure, it being around the corresponding pivot pin of the bracket member that the sun visor may occupy any position selected by the user among the regular positions of use. Apart from the said pivot means, the sun visors also generally include a hanging bridge disposed in the end opposite to that occupied by the pivot means. The said hanging bridge may engage a support member attached to the automobile structure so that, once the hanging bridge is engaged with the support member, under certain conditions they prevent the said sun visor support pivot means from being subjected to mechanical overloads which could affect the operation thereof and, more precisely, the positional stability thereof.

The above described sun visors also have an external sheath like covering which consists generally of a covering of the sun visor body with a plastics material such as polypropylene. The purpose of this covering is to confer on the sun visor a surface finish in keeping with the internal finish of the automobile passenger compartment.

Where a very high quality level of the sun visor finish is requirable, the above described plastics material covering is inappropriate in view of the very notable difference of texture to be observed between the plastics material and the fabric and/or leather material used in these cases as covering for the vehicle passenger compartment.

The problems arising for providing a sun visor of the above described type with an external covering using a woven material or leather are also known. Such problems are mainly to provide such fabric or leather covering with an external finish in which the sewn seams of the constituent parts may not be perceived either by sight or by touch. In this respect, U.S. patent 4,822,095 discloses a sun visor having a woven material sheath and a method for the manufacture thereof. The said U.S. patent 4,822,095 describes a sun visor provided with a woven covering consisting of a sheath of essentially rectangular profile having the perimeter closed by sewing in which the seam is completely on the inside, the interior of the sheath being accessible, for housing the sun visor body, through an opening formed for such purpose in one of the longer sides of the sheath.

The main drawbacks of the sun visor described in U.S. patent 4,822,095 are the following: the opening through which the sun visor body is inserted in the sheath is of necessity very large and, once the sun visor body is housed in the sheath, the said opening must be covered or concealed with an additional member such as may be the vanity mirror itself; and the need to cover or conceal the said sheath opening extends to both sun visors normally fitted to automobiles, i.e., the driver's side sun visor and the passenger's side sun visor which, obviously, makes the production cost of the sun visors more expensive.

### Summary of the Invention

With a view to providing a new sun visor embodiment having a fabric or leather material covering providing a solution to the above described problems and which are basically caused by the need to form an opening in the sheath through which the sun visor body is inserted, there is disclosed an automobile sun visor of new structure.

The sun visor of the invention comprises in all or in part the following known members:
- a metallic structural member constituted basically by a metallic rod which forms an essentially rectangular frame;
- fixedly attached to one of the longitudinal ends of the frame the means for snugly receiving the bracket member pivot pin attached to the vehicle structure, said means allowing the sun visor to be rotated about said pivot pin and stably to occupy any position of use further to the corresponding rest position or positions;
- also fixedly attached to the frame at the longitudinal end practically opposite to the previous one, a hanging bridge which may engage a support member attached to the automobile structure, said hanging bridge, once engaged with the support member, preventing the said pivoting means from being subjected, under certain conditions, to the effects of mechanical overloads which may affect the stability of the position occupied by the sun visor;
- a body made from foamed polyurethane in which there are included the said frame, means for receiving the bracket member pivot pin and the hanging bridge, said body having a basically rectangular profile shape mating with the configuration of the interior of the automobile passenger compartment;
- on one of the larger sides of the sun visor any additional device such as may be, among others, the so-called vanity mirror.

The automobile sun visor of the invention is characterized in that it comprises a retaining clip included in the visor body which is firmly attached to one of the shorter sides of the internal structural member, with the front edges of the retaining clip arms reaching, internally, flush with the outer surface of the corresponding sun visor side, said retaining clip acting as a housing and retainer for the free end of the longitudinal bag-shaped sheath which snugly covers the outer surface of the sun visor, there being formed on the front edges of the retaining clip arms a fine joint line for the said free end of the sheath.

In accordance with the above described features of the sun visor of the invention, the fabric and/or leather material sun visor sheath does not require the presence of any opening on one or the other of the larger sides thereof to allow the insertion of the sun visor body. In this way, the sun visor of the invention solves the above described problems caused by the known sun visor embodiments covered with a woven material sheath. In fact, the sun visor of the invention may be supplied as original equipment with a woven or leather material sheath and with a completely uniform surface finish free from any opening as is required, in general, for the driver's side sun visor. Obviously, the sun visor of the invention may comprise on the corresponding larger side any additional member such as is the vanity mirror of the passenger side sun visor.

The retaining clip is attached to the side of shorter free length of the sun visor structural member positionally opposite to the receiving means for the bracket member pivot pin attached to the vehicle structure, the retaining clip being disposed inside the sun visor body in such a way that, preferably, both arms thereof are parallel to the corresponding outer surfaces of the larger sides of the sun visor body.

The bag-like sheath covering the sun visor body is elongate and formed by a textile and/or leather material, said bag, which has the corresponding open or free longitudinal end, is shaped by sewing along its joining edges positionally mating with the limit of the perimetrical profile of the sun visor, the seam being directed precisely towards the interior of the bag, defining a fine joint line on the outside.

The retaining clip, which is a one-piece member and is preferably made from a highly resilient sheet steel, is essentially U-shaped and is symmetrical about the longitudinal centre line thereof. The retaining clip comprises on the bottom means for firm attachment to the corresponding side of the sun visor structural member and forms between the arms thereof, which are transversely coextensive with the said side of the structural member, a housing for snugly receiving the free end of the bag-like sheath covering the sun visor body.

### Brief Description of the Drawing

In the drawing sheets of the present specification there is shown the automobile sun visor of the invention. In the drawings:
Figure 1 is a part section view showing the retaining clip attached to the sun visor structural member.
Figure 2 is a part perspective view of the retaining clip.
Figure 3 is a cross section view on the line III-III of Figure 1.
Figures 4, 5 and 6 are cross section views of respective successive stages of the covering of the sun visor body with a fabric material sheath.
Figure 7 is a part cross section view of the sun visor of the invention.

### Detailed Description of the Embodiment

In this embodiment of the automobile sun visor of the invention, there are described for the purpose of achieving greater clarity of disclosure the elements characterizing it and those known members with which they are associated, avoiding all those known members such as the receiving means for the bracket member pivot pin, the hanging bridge, the vanity mirror, etc. which in no case affect the essence of the invention and which have not been shown in the drawing figures.

In this way, Figure 7 of the drawing sheets shows how this embodiment of the sun visor of the invention comprises the structural member 1; the body 2; the retaining clip 3; and the covering 4.

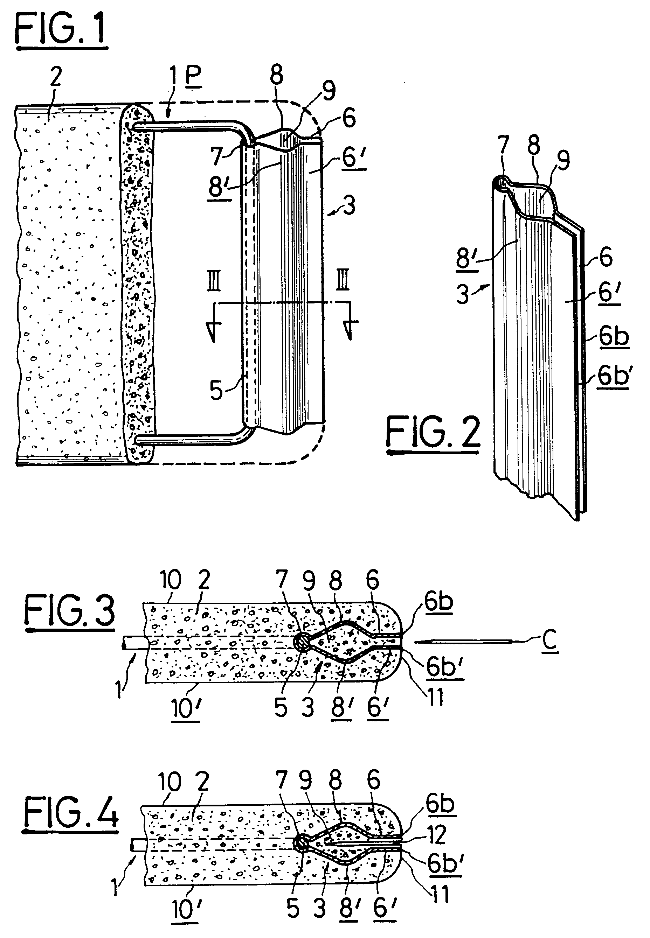

In this embodiment of the sun visor of the invention, the structural member 1 of the sun visor is formed by a circular section metal rod forming a basically rectangular perimeter. In Figures 1 and 7, the metal structural member 1 has been shown in part, there being shown the part P which is the portion opposite to the portion attached to the means for receiving the pivot pin of the bracket member attached to the automobile structure. Such receiving means and bracket member, as said above, have not been shown in the drawing Figures.

Figures 1 and 7 show how the side 5 of the metal structural member 1 is precisely the shorter side adjacent the sun visor hanging bridge and which, as explained before, has not been shown either in the drawing figures. It is on this side 5 of the metal structural member 1 where, as shown in Figures 1, 3, 4, 5, 6 and 7, there is mounted the retaining clip 3.

The retaining clip 3, as shown in Figures 1 and 2, is a one-piece member and is made, preferably, from highly resilient sheet steel of quadrangular shape.

Figures 1, 2 and 7 show how the retaining clip 3 is essentially elongate and U-shaped and the constituent arms thereof 6 and 6' extend practically along the side 5 of the sun visor structural member 1. The said retaining clip 3 comprises: along the full length of the bottom the essentially circular housing 7 where the corresponding portion of the side 5 of the structural member 1 is firmly housed, as shown in Figures 1, 3, 4, 5, 6 and 7; and, extending from the said housing 7 on each side of the constituent arms 6 and 6', respective facing projections 8, 8' coextensive with the retaining clip 3 and defining internally a basically circular section passage 9 as shown in Figures 1 to 6.

The sun visor body 2 is made, as explained before, from foam polyurethane and, as shown in part in Figures 1 and 7, it is essentially rectangular shaped in keeping with the interior of the automobile passenger compartment. In this embodiment of the sun visor of the invention, the profile of the body 2 shown in Figures 1 and 7 is given only as an example and said profile may adopt any other shape in keeping with the interior of the vehicle passenger compartment without this in any way affecting the essence of the invention.

Figures 1, 3, 4, 5, 6 and 7 show how the metal structural member 1 and the retaining clip 3 are totally included within the inside of the sun visor body 2 in such a way that the internal volume of the retaining clip 3, i.e. the passage 9 thereof and the volume defined between the corresponding facing parallel surfaces of the arms 6 and 6' thereof are fully occupied by the material forming the sun visor body 2.

Figures 3, 4, 5, and 6 show how the retaining clip 3 which, as said above, is firmly attached to the side 5 of the metal structural member 1, has the arms 6 and 6' thereof disposed parallel to the larger sides 10 and 10' of the sun visor body 2.

Figures 3, 4, 5, and 6 show how the arms 6 and 6', respectively, of the retaining clip 3 are dimensioned in such a way that the respective front edges 6b and 6b' thereof internally extend up to the surface 11 of the sun visor body 2 facing said front edges 6b and 6b'.

Once the sun visor body 2 has been formed, a blade C shown in Figure 3 is used to make a relatively small incision 12 which, as shown in Figure 4, extends centrally and coextensively between the arms 6 and 6' of the retaining clip 3 and extends in depth to the passage 9 formed by the facing projections 8 and 8'.

In this embodiment of the sun visor of the invention, the covering 4 consists of the sheath 13 made from a portion of fabric material of essentially quadrangular shape which has been subjected to a shaping process which, succinctly, comprises the following operations: in the first place, a folding operation in which said portion is overlapped to give an essentially rectangular shape; then a sewing operation of two of the adjacent edges thereof; and, finally, the reversing of the bag-like sheath 13 on itself so as to dispose the seam 14 of sewing of the two said edges on the inside, as shown in Figure 7. These operations described are also applicable where the covering 4 of the sun visor were made from a portion of leather also of quadrangular shape. Obviously, the texture, colour and finish of the covering 4 will be adapted to the specific needs of the automobile passenger compartment in each particular application.

The description of the shaping of the sun visor sheath 13 of the invention given in the foregoing paragraph is given only as a guidance since, as is known, a similar bag shape may be formed in different ways without this affecting in any way the essence of the invention.

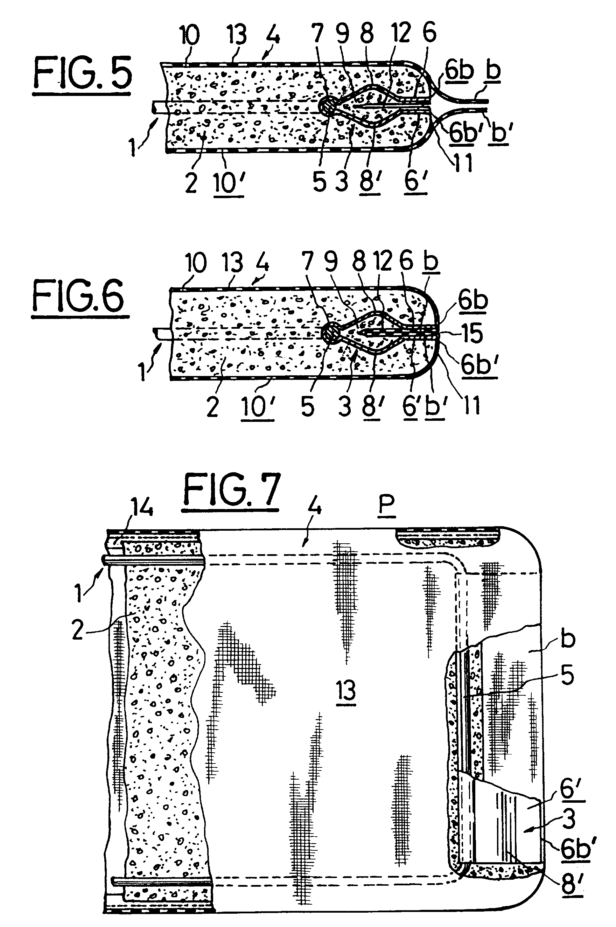

The woven material sheath 13 is dimensioned in such a way that the length thereof is longer than the sun visor body 2 in the size of the fringes referenced as b and b' in Figures 5, 6 and 7. These fringes b and b' obviously form the open end of the sheath 13.

It is extremely easy to couple the woven material sheath 13 to the sun visor body 2 and consists of the following operations:
- in the first place, as shown in part in Figure 5, the sun visor body 2 is inserted in the sheath 13, in such a way that the fringes b and b' of the sheath 13 are situated in the end of the sun visor body 2 in which there is included the retaining clip 3 and are disposed parallel to the arms 6 and 6' thereof;
- once the operation described in the foregoing paragraph has been carried out, the woven material sheath 13 completely snugly covers the sun visor body 2 without the seam 14 where the corresponding edges of the sheath 13 are sewn together being noticeable, which seam, as seen in Figure 7, is comprised between the sun visor body 2 and the sheath 13 itself;
- thereafter, using spatulas or metal strips which, for the same reasons as those mentioned before, have not been shown in the drawings, the fringes b and b' of the sheath 13 are inserted in the incision 12 formed between the arms 6 and 6', respectively, of the retaining clip 3, as shown in Figures 6 and 7;
- in this way, the arms 6 and 6' of the retaining clip 3,through the material forming the sun visor body 2, by their own resilience firmly retain the fringes b and b' of the sheath 13, pressing one against the other, whereby, under normal conditions of use, they may not come out of their place between the arms 6 and 6' of the retaining clip 3.

Once the sheath 13 has been mounted on the sun visor body 2 as described above, the sun visor is provided with a woven material covering 4 in which the seam 14 of the sheath 13 may neither be seen nor felt, there being formed in the front edges 6b and 6b' of the retaining clip 3 a fine joint line 15, shown in Figure 6, of the free edges b and b' of the sheath 13. And, furthermore, the woven material covering 4 completely covers the outer surface of the sun visor, that is, said covering 4 is free from any opening, unlike the known sun visor embodiments having a fabric or leather material covering.

From the foregoing it will be understood that, if necessary, any additional element or device improving its performance may be incorporated in the sun visor of the invention, such as happens with the passenger side sun visor which usually includes as original equipment the so-called vanity mirror.

## Claims

1. Automobile sun visor characterized in that it comprises a retaining clip (3) included in the visor body (2) and which is firmly attached to one of the shorter sides (5) of the internal structural member (1) thereof, with the front edges (6b, 6b') of the retaining clip (3) arms (6, 6') reaching, internally, flush with the outer surface of the corresponding sun visor side (11), said retaining clip (3) acting as a housing and retainer for the free end (b, b') of the longitudinal bag-shaped sheath (13) which snugly covers the outer surface of the sun visor, there being formed on the front edges (6b, 6b') of the retaining clip (3) arms (6, 6') a fine joint line (15) for the said free end (b, b') of the sheath (13).

2. The automobile sun visor of claim 1, characterized in that the retaining clip (3) is attached to the side of shorter free length (5) of the sun visor structural member (1) positionally opposite to the receiving means for the bracket member pivot pin attached to the vehicle structure, the retaining clip (3) being disposed inside the sun visor body (2) in such a way that, preferably, both arms (6, 6') thereof are parallel to the corresponding outer surfaces of the larger sides (10, 10') of the sun visor body (2).

3. The automobile sun visor of claims 1 and 2, characterized in that the bag-like sheath (13) covering the sun visor body (2) is elongate and formed by a textile and/or leather material, said bag (13), which has the corresponding open or free longitudinal end (b, b'), is shaped by sewing along its joining edges positionally mating with the limit of the perimetrical profile of the sun visor, the seam (14) being directed precisely towards the interior of the bag (13), defining a fine joint line on the outside.

4. The automobile sun visor of claims 1 to 3, characterized in that the retaining pin (3), which is a one-piece member and is preferably made from a highly resilient sheet steel, is essentially U-shaped and is symmetrical about the longitudinal centre line thereof, said retaining pin (3) comprising on the bottom means (7) for firm attachment to the corresponding side (5) of the sun visor structural member (1) and forming between the arms (6, 6') thereof, which are transversely coextensive with the said side (5) of the structural member (1), a housing for snugly receiving the free end (b, b') of the bag-like sheath (13) covering the sun visor body (2).
